**Europäisches Patentamt**

**European Patent Office**

**Office européen des brevets**

(19)

(11) Veröffentlichungsnummer: **0 126 288**
**B1**

(12)
## EUROPÄISCHE PATENTSCHRIFT

(45) Veröffentlichungstag der Patentschrift:
24.09.86

(51) Int. Cl.⁴: **B 01 J 19/24,** B 01 D 3/14,
**B 01 J 10/00**

(21) Anmeldenummer: **84104208.8**

(22) Anmeldetag: **13.04.84**

(54) Verfahren zur Durchführung von chemischen Reaktionen und gleichzeitiger destillativer Zerlegung eines Produktgemisches in mehrere Fraktionen mittels einer Destillationskolonne.

(30) Priorität: 21.04.83 DE 3314395

(43) Veröffentlichungstag der Anmeldung:
28.11.84 Patentblatt 84/48

(45) Bekanntmachung des Hinweises auf die Patenterteilung:
24.09.86 Patentblatt 86/39

(84) Benannte Vertragsstaaten:
BE CH DE FR GB IT LI NL

(56) Entgegenhaltungen:
EP-A-0 122 367
DE-A-2 809 941
GB-A-819 102
US-A-2 471 134
US-A-4 230 533

(73) Patentinhaber: BASF Aktiengesellschaft, Carl-Bosch-Strasse 38, D-6700 Ludwigshafen (DE)

(72) Erfinder: Kaibel, Gerd, Robert-Bosch-Strasse 4, D-6840 Lampertheim (DE)

### Beschreibung

Die Erfindung betrifft ein Verfahren zur Durchführung von chemischen Reaktionen und gleichzeitiger destillativer Zerlegung eines Produktgemisches in mehrere Fraktionen mittels einer Destillationskolonne, die in Teilbereichen durch in Längsrichtung wirksame Trenneinrichtungen, die eine Quervermischung von Flüssigkeits- und/oder Brüdenströmen verhindern, in einen Reaktionsteil und einen Destillationsteil unterteilt ist.

Die Durchführung von chemischen Reaktionen in Destillationskolonnen, wobei chemische Reaktionen und destillative Stofftrennung sich überlagern und im gleichen Raum nebeneinander ablaufen, ist eine seit langem praktizierte Verfahrensführung. Häufig bietet diese Verfahrensführung Vorteile hinsichtlich Energiebedarf und Investitionskosten im Vergleich zu Verfahrensführungen, bei denen die Reaktion und die destillative Stofftrennung in getrennten Verfahrensschritten, nämlich Reaktion in einem Reaktor und anschließende destillative Stofftrennung in einer Destillationskolonne, stattfinden. Beispiele für chemische Reaktionen, die vorteilhaft in Destillationskolonnen durchgeführt werden, sind Veresterungen, Umesterungen und Verseifungen sowie Acetalisierungen und Acetalspaltungsreaktionen. Besonders geeignet sind Destillationskolonnen für Gleichgewichtsreaktionen, bei denen alle Reaktanden ähnliche Siedepunkte aufweisen, die Reaktionsprodukte dagegen wesentlich höher und/oder niedriger sieden. Jedoch auch bei Reaktionen, bei denen dieses optimale Siedeverhalten nicht gegeben ist, können Destillationskolonnen sinnvoll eingesetzt werden, da sie die Verwirklichung des günstigen Gegenstroms der Reaktanden ermöglichen. Dadurch ergeben sich höhere Umsätze als für die direkte Vermischung ohne Gegenstrom.

So kann beispielsweise bei einer Reaktion A + B (Reaktanden) $\rightleftarrows$ C + D (Reaktionsprodukte), der Siedefolge A, C, B, D - nach ansteigenden Siedetemperaturen geordnet - und einem nicht im stöchiometrischen Verhältnis sondern im Überschuß zugefahrenen Reaktand A, aus der Destillationskolonne als Kopfprodukt das Gemisch aus A und C und als Sumpfprodukt D abgezogen werden. Zur destillativen Zerlegung des Kopfproduktes A und C ist eine weitere, nachgeschaltete Destillationskolonne notwendig. Entsprechendes gilt, wenn ein Reaktand die schwerstsiedende Komponente ist. Auch hierbei ist bei gleicher Siedefolge wie oben eine zusätzliche Destillationskolonne erforderlich, um den nicht umgesetzten Reaktanden B sowie das Reaktionsprodukt D in reiner Form zu gewinnen. Destillationskolonnen werden selbst in solchen Fällen eingesetzt, wo die Reaktionsprodukte weder Leichtestsieder noch Schwerstsieder sind. Bei einer Reaktion A + B $\rightleftarrows$ C + D, der Siedefolge A, C, D, B bedeutet dies, daß hier zwei zusätzliche Destillationskolonnen zur Reinigung der Reaktionsprodukte C und D gebraucht werden. Trotzdem ergeben sich auch hier oft Vorteile gegenüber der Reaktion in einem separaten Reaktor, da die Destillationskolonne die Ausnutzung des Gegenstromprinzips ermöglicht und unter günstigeren Konzentrationsverhältnissen arbeitet.

Dieses wichtige Prinzip der Ausnutzung des Gegenstroms wird jedoch in diesen Fällen durch die Überlagerung von Reaktion und destillativer Trennaufgabe teilweise nachteilig beeinflußt; so führt beispielsweise im zuletztgenannten Fall eine Steigerung der Heizleistung nicht in jedem Fall zu einer Verbesserung des Umsatzes, denn infolge des höheren Rücklaufverhältnisses erfolgt eine stärkere Verdünnung der Reaktanden und des Katalysators in der Reaktionszone.

Diese in der Fachliteratur bislang nicht beachteten Effekte führen beispielsweise in dem Fall der Reaktion A + B $\rightleftarrows$ C + D, der Siedefolge A, C, B, D und einem im Überschuß gefahrenen Reaktand A, dazu, daß ein bestimmtes Ergebnis der Destillationskolonne hinsichtlich Umsatz und Entnahzekonzentration nicht nur bei einer fest vorgegebenen Heizleistung sondern auch bei einer wesentlich höheren Heizleistung erhalten wird. Es sind zwei verschiedene Betriebszustände möglich. Der Grund für dieses höchst überraschende Verhalten liegt, wie Simulationsrechnungen ergaben, darin, daß sich im einen Fall mit der niedrigeren Heizleistung der Gegenstrom noch gut auswirken kann, während er in anderen Fall durch zu hohe Rückvermischung abgeschwächt wird. Es ist ein mehrfach höherer Energieaufwand erforderlich, um diesen Fehler durch destillatives Anreichern eines Reaktanden wieder zu kompensieren. Hier gehen die Vorteile der Destillationskolonne weitgehend verloren. Aus dem Geschilderten ist zu entnehmen, daß die uneingeschränkte Überlagerung von Reaktion und Destillation nicht in jedem Fall sinnvoll ist.

Aufgabe der vorliegenden Erfindung ist es, durch eine einfache Maßnahme, die variabel den verschiedensten Fällen von Destillationskolonnen angepaßt werden kann, zu erreichen, daß die für die Stofftrennung benötigte Destillationsenergie den Gegenstrom der Reaktanden nicht unnötigerweise über das günstige Maß hinaus beeinflußt. Zusätzlich soll der Nachteil vermieden werden, der dadurch entsteht, daß bei ungünstigem Siedeverhalten von Reaktanden und Reaktionsprodukten zusätzliche Trennkolonnen zur Reinigung der Produktströme erforderlich werden.

Diese Aufgabe wird erfindungsgemäß in überraschend einfacher Weise dadurch gelöst daß dem Reaktionsteil zwei oder mehrere Reaktanden und gegebenenfalls ein Katalysator zugeführt werden und aus dem Destillationsteil gleichzeitig eine oder mehrere Mittelsiederfraktionen, die aus Reaktanden und/oder Reaktionsprodukten bestehen können, und die von Verunreinigungen durch Kopf- und Sumpffraktionen frei oder weitgehend frei sind, dampfförmig oder flüssig abgezogen werden.

Wie in der EP-A-0 122 367 (Priorität: 26.1.83; 18.1.84; Veröffentlichungstag: 24.10.84) für den Fall einer einfachen Destillation beschrieben, enthält die Destillationskolonne in Teilbereichen in Längsrichtung wirksame Trennvorrichtungen zur Verhinderung einer Quervermischung von Flüssigkeits-und/oder Brüdenströmen: ähnliches gilt für die Destillationskolonne gemäß der US-P-2,471,134.

Ein Ausführungsbeispiel der Erfindung ist in der Zeichnung dargestellt und wird im folgenden näher beschrieben.

Es zeigen:

Figur 1 ein schematisches Verfahrensfließbild einer Destillationskolonne mit der Reaktion A + B $\rightleftharpoons$ C + D, Siedefolge A, C, B, D und einem nicht im stöchiometrischen Verhältnis sondern im Überschuß zugefahrenen Reaktanden A zur destillativen Trennung der Produktströme A, C und D,

Figur 2 ein schematisches Verfahrensfließbild einer Destillationskolonne mit der Reaktion A + B $\rightleftharpoons$ C + D, Siedefolge A, C, D, B zur destillativen Trennung der Produktströme A, B, C und D.

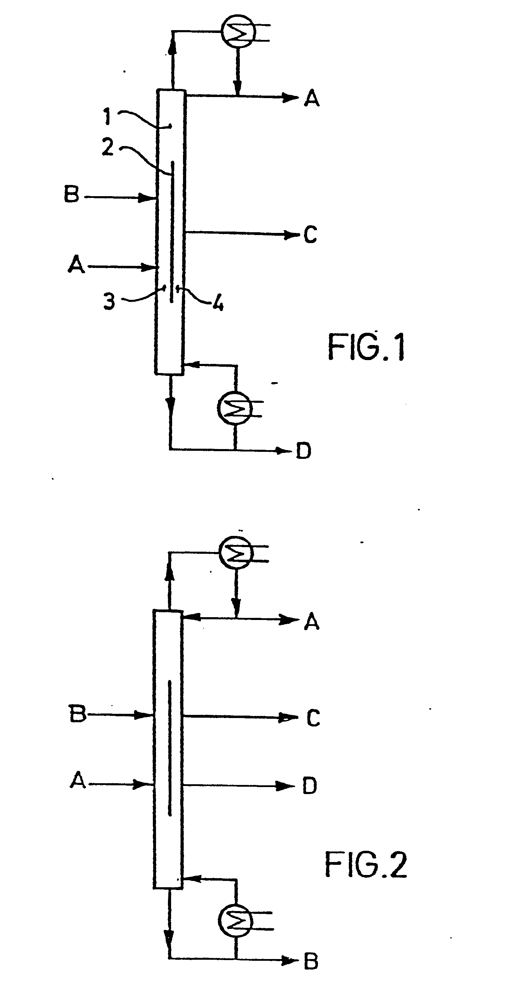

Gemäß Figur 1 wird eine Kolonne 1 durch eine in Längsrichtung wirksame Trenneinrichtung 2 unterhalb und oberhalb der Zulaufstellen für die Reaktanden A und B in einen Reaktionsteil 3 und einen Destillationsteil 4 unterteilt. Entsprechend der Siedefolge wird der leichtestsiedende Reaktand A am Kopf und das schwerstsiedende Reaktionsprodukt D am Sumpf der Kolonne entnommen. Da im Destillationsteil 4 die Reaktion unterdrückt ist, ist es möglich, dort das mittelsiedende Reaktionsprodukt C in reiner oder weitgehend reiner Form abzuziehen.

Wie Figur 2 zeigt, ist es bei der gleichen Anordnung auch möglich, bei dem besonders ungünstigen Fall, wenn beide Reaktionsprodukte weder die leichtestsiedende noch die schwerstsiedende Fraktion sind und nach herkömmlicher Verfahrensweise zwei zusätzliche Destillationskolonnen benötigt werden, mit einer Destillationskolonne die gestellte Aufgabe - nämlich die Reaktionsprodukte C und D in reiner Form zu gewinnen - zu lösen; wobei durch eine entsprechende Aufteilung der Flüssigkeits- und Dampfströme auf Reaktions- und Destillationsteil der Gegenstrom optimal zur Wirkung kommt und der Gesamtaufwand verringert werden kann.

Durch diese Längsunterteilung wird die Möglichkeit geschaffen, einen separaten Kolonnenteil zu erhalten, in dem man die Reaktion unter den für sie optimalen Bedingungen hinsichtlich Heizleistung, Rückvermischung und Katalysatorkonzentration ablaufen lassen kann. Der meist nichtflüchtige oder schwerflüchtige Katalysator (z.B. Mineralsäure für Veresterungen, Verseifungen, Acetalbildungen und -spaltungen oder Umacetalisierungen oder Alkoholate für Umesterungen) oder auch leichtflüchtigen Katalysator (beispielsweise Chlorwasserstoff,

Ameisensäure) läßt sich entsprechend seinem Siedeverhalten durch die Wahl seiner Zugabestelle gezielt in diesen Destillationskolonnenteil - Reaktionsteil - einbringen. Wegen der geringeren Verdünnung des Katalysators in dem Reaktionsteil ergeben sich im allgemeinen Einsparungen hinsichtlich der benötigten Katalysatormengen oder es werden einfachere Kolonneneinbauten möglich, die weniger Verweilzeit für die Flüssigkeit einstellen, z.B. Füllkörperkolonnen anstelle von teureren Glocken- oder Ventilbodenkolonnen. Dies bietet auch Vorteile, wenn die Verweilzeit wegen der Temperaturempfindlichkeit der Produkte möglichst klein sein soll. In dem dem Reaktionsteil gegenüberliegenden Destillationsteil kann die chemische Reaktion verhindert werden, indem der Katalysator aus diesem Bereich ferngehalten wird, was sich entweder infolge seiner Nichtflüchtigkeit oder Leichtflüchtigkeit von selbst ergibt oder aber durch besondere Maßnahmen wie beispielsweise gezielte Zerstörung einer katalysierenden Säure durch Zudosierung einer Lauge im Destillationsteil erzielbar ist und so nur destillative Stofftrennungen ablaufen. Ezpfindliche Stoffe, die durch den Katalysator leicht geschädigt werden, können aus diesem Teil schonend abgetrennt werden. Die Reaktionszone kann gegebenenfalls bereits im Reaktionsteil gezielt eingegrenzt werden, indem man beispielsweise die Reaktionszone nur auf den Bereich zwischen den Zulaufstellen der Reaktanden beschränkt.

Zur technischen Ausgestaltung der in Längsrichtung wirksamen Trenneinrichtungen kommen, wie in der EP-A- 0 122 367 geschildert, mehrere Möglichkeiten in Betracht. Die einfachste Möglichkeit stellen ebene durchgehende Trennbleche dar. Gegebenenfalls können jedoch 2 konzentrische oder nebeneinander angeordnete Destillationskolonnen benutzt werden.

Die chemische Reaktion kann auch in einer Destillationskolonne stattfinden, bei der zur Erhöhung der Verweilzeit separate Verweilzeitbehälter außerhalb der Destillationskolonne angeordnet werden, in denen die Reaktion gegebenenfalls durch Ionentauscher katalysiert wird.

Einen besonders wertvollen Vorteil bietet die Längsunterteilung der Destillationskolonne gemäß der vorliegenden Erfindung hinsichtlich der Reinheit der entnommenen Produkte.

**Patentansprüche**

1.Verfahren zur Durchführung von chemischen Reaktionen und gleichzeitiger destillativer Zerlegung eines Produktgemisches in mehrere Fraktionen mittels einer Destillationskolonne, die in Teilbereichen durch in Längsrichtung wirksame Trenneinrichtungen, die eine Quervermischung von Flüssigkeits- und/oder Brüdenströmen verhindern, in einen Reaktionsteil und einen Destillationsteil unterteilt ist, dadurch gekennzeichnet, daß dem Reaktionsteil (3) zwei oder mehrere Reaktanden und gegebenenfalls ein Katalysator zugeführt werden und aus dem Destillationsteil (4) gleichzeitig eine oder mehrere Mittelsiederfraktionen, die aus Reaktanden und/oder Reaktionsprodukten bestehen können, und die von Verunreinigungen durch Kopf- und Sumpffraktionen frei oder weitgehend frei sind, dampfförmig oder flüssig abgezogen werden.

2. Vorrichtung zur Durchführung des Verfahrens gemÄß Anspruch 1, dadurch gekennzeichnet, daß Reaktionsteil (3) und Destillationsteil (4) gemeinsam in einer Destillationskolonne angeordnet und durch in Längsrichtung wirksame Trenneinrichtungen (2) voneinander getrennt sind.

## Claims

1. A method of carrying out a chemical reaction and simultaneously separating a product mixture into several fractions by means of a distillation column which, in parts, is divided into a reaction section and a distillation section by separating means which are effective in the longitudinal direction and prevent cross-mixing of liquid and/or vapor streams, wherein two or more reactants and, where relevant, a catalyst are fed into the reaction section (3), and at the same time one or more medium-boiling fractions, which can consist of reactants and/or reaction products and are free, or substantially free, from contamination by overhead and bottom fractions, are taken off in vapor or liquid form from the distillation section (4).

2. Apparatus for carrying out the method as claimed in claim 1, wherein the reaction section (3) and the distillation section (4) are located in a single distillation column and are separated from one another by separating means (2) which are effective in the longitudinal direction.

## Revendications

1.- Procédé d'exécution de réactions chimiques et de décomposition simultanée, par distillation, d'un mélange de produits en plusieurs fractions au moyen d'une colonne de distillation qui est subdivisée en zones partielles par des moyens séparateurs agissant en direction longitudinale, qui empêchent un mélange transversal de liquides et/ou courants de vapeur, zones comprenant une partie réaction et une partie distillation, caractérisé par le fait qu'à la partie réaction (3) sont amenés deux ou plus de deux produits à faire réagir et éventuellement un catalyseur et que de la partie distillation (4) sont soutirées à l'état de vapeur ou de liquide, simultanément une ou plusieurs fractions moyennes, qui peuvent être constituées de produits à faire réagir et/ou de produits de réaction et qui sont débarrassées, totalement, ou dans une large mesure, d'impuretés provenant de fractions de tête et de fond de colonne.

2.- Dispositif pour la mise en oeuvre du procédé selon la revendication 1, caractérisé par le fait que la partie réaction (3) et la partie distillation (4) sont situées en commun dans une colonne de distillation et séparées l'une de l'autre par des moyens séparateurs (2) agissant en direction longitudinale.

FIG.1

FIG.2